Europäisches Patentamt

European Patent Office

Office européen des brevets

(19)

(11) Veröffentlichungsnummer: **0 450 524 A2**

## (12) EUROPÄISCHE PATENTANMELDUNG

(21) Anmeldenummer: **91105045.8**

(22) Anmeldetag: **28.03.91**

(51) Int. Cl.5: **H04J 14/02**

(30) Priorität: **03.04.90 DE 4010712**

(43) Veröffentlichungstag der Anmeldung:
**09.10.91 Patentblatt 91/41**

(84) Benannte Vertragsstaaten:
**AT BE CH DE DK ES FR GB IT LI NL SE**

(71) Anmelder: **Standard Elektrik Lorenz Aktiengesellschaft Lorenzstrasse 10**

**W-7000 Stuttgart 40(DE)**

(72) Erfinder: **Heidemann, Rolf, Dr.
Weinsberger Weg 14
W-7146 Tamm(DE)**

(74) Vertreter: **Kugler, Hermann, Dipl.-Phys. et al
Standard Elektrik Lorenz AG Patent- und
Lizenzwesen Postfach 30 09 29
W-7000 Stuttgart 30(DE)**

(54) **Optisches Nachrichtenübertragungssystem mit einem faseroptischen Verstärker.**

(57) Bei einem optischen Übertragungssystem mit einem faseroptischen Verstärker (10), der einen wellenlängenselektiven faseroptischen Koppler (12) zum Einkoppeln von Pumplicht in das verstärkende Faserstück (11) enthält, wird erfindungsgemäß ein zusätzliches optisches Signal, z.B. aus einem Dienstkanal, vom Ort des faseroptischen Verstärkers (10) in die eine oder andere Übertragungsrichtung übertragen, in dem es in den freien Anschluß (4) des wellenlängenselektiven faseroptischen Kopplers (12) eingekoppelt wird. Jeder zur Einkopplung des Pumplichts in das verstärkende Faserstück (11) geeignete Koppler (12) ist ohne besondere Maßnahmen dazu geeignet, auf diese Weise ein zusätzliches optisches Signal in den Übertragungs-Lichtwellenleiter (15) des Systems einzukoppeln.

Fig. 1

EP 0 450 524 A2

Die Erfindung betrifft ein System zum Übertragen eines optischen Signals, wie es im Oberbegriff des Patentanspruchs 1 beschrieben ist.

Ein solches Übertragungssystem ist bekannt aus "ECOC '89", Fifteenth European Conference on Optical Communication, September 10-14, 1989, Gothenburg, Sweden, Proceedings, Vol. 1, Regular Papers TuA 5-7, Seiten 86 bis 89.

Dort sind zwei verschiedene Systemkonfigurationen erläutert. Bei der ersten (co-propatating configuration) wird das Licht der Pumplicht-Quelle über einen Koppler in das $Er^{3+}$-dotierte Faserstück eingekoppelt, der, bezogen auf die Übertragungsrichtung des zu verstärkenden optischen Signals, vor dem verstärkenden Faserstück angeordnet ist. Bei der zweiten Systemkonfiguration (counter-propagating configuration) befindet sich der das Pumplicht in das verstärkende Faserstück einkoppelnde Koppler, bezogen auf die Übertragungsrichtung des zu verstärkenden Signals, hinter dem Faserstück.

Bisweilen ist es bei Übertragungssystemen erwünscht oder notwendig, zusätzlich zu dem ersten optischen Signal ein zweites optisches Signal von dem Ort, an dem sich der faseroptische Verstärker befindet, in der einen oder anderen Richtung zu übertragen.

Es ist die Aufgabe der Erfindung, ein hierzu geeignetes System anzugeben.

Die Aufgabe wird wie im Patentanspruch 1 angegeben gelöst. Weiterbildungen ergeben sich aus den Unteransprüchen.

Die Erfindung wird nun anhand der Zeichnungen durch Beispiele näher erläutert. Es zeigen:

Fig. 1    ein erstes Ausführungsbeispiel zum Übertragen des zweiten optischen Signals in der entgegengesetzten Richtung zum ersten optischen Signal, und

Fig. 2    ein zweites Ausführungsbeispiel zum Übertragen des zweiten optischen Signals in mit dem ersten optischen Signal gleicher Übertragungsrichtung.

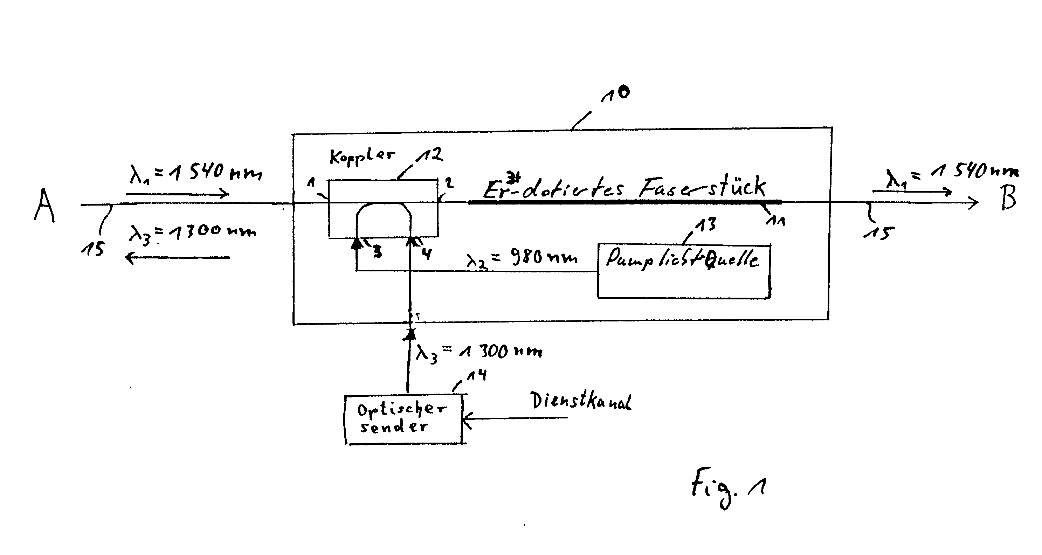

Die Fig. 1 zeigt ein Übertragungssystem, mit dem ein optisches Signal von einem Punkt A zu einem Punkt B zu übertragen ist. Am Endpunkt A befindet sich ein nicht gezeigter optischer Sender und am Endpunkt B ein nicht gezeigter optischer Empfänger. Das von A nach B zu übertragende optische Signal hat eine Wellenlänge $\lambda_1$ von 1540 nm. Als Übertragungsstrecke dient ein Monomode-Lichtwellenleiter 15, der bei der Wellenlänge $\lambda_1$ ausreichend gute Übertragungseigenschaften hat.

Wie das eingangs genannte bekannte System enthält auch das System nach Fig. 1 einen faseroptischen Verstärker 10, der besteht aus einem $Er^{3+}$-dotierten Faserstück 11, einem wellenlängenselektiven faseroptischen Koppler 12 und einer Pumplicht-Quelle 13. Der Koppler 12 hat vier Anschlüsse 1 bis 4. Sein Anschluß 1 ist mit dem vom Endpunkt A kommenden Lichtwellenleiter 15 verbunden, sein Anschluß 2 ist mit dem $Er^{3+}$-dotierten Faserstück 11 und sein Anschluß 3 über ein Lichtwellenleiterstück mit der Pumplicht-Quelle 13 verbunden. Als Koppler 12 ist ein solcher wellenlängenselektiver Koppler zu verwenden, der die Eigenschaft hat, das von A nach B zu übertragende optische Signal mit der Wellenlänge $\lambda_1$ möglichst ungedämpft am Kopplerausgang 2 auszugeben und das von der Pumplicht-Quelle 13 erzeugte Pumplicht mit der Wellenlänge $\lambda_2$ von 980 nm vom Kopplereingang 3 möglichst verlustfrei ebenfalls am Kopplerausgang 2 auszugeben. Dadurch gelangt in das $Er^{3+}$-dotierte Faserstück 11 nicht nur das zu verstärkende optische Signal, sondern auch das zur Verstärkung erforderliche Pumplicht.

Erfindungsgemäß ist der weitere Koppleranschluß 4 dazu verwendet, ein zweites optisches Signal vom Ort des faseroptischen Verstärkers in Richtung zum Endpunkt A des Übertragungssystems zu übertragen. Die in dieser Richtung zu übertragenden elektrischen Signale, z.B. aus Dienstkanälen oder Rückkanälen, setzt ein optischer Sender 14 in ein optisches Signal mit einer Wellenlänge $\lambda_3$ von 1300 nm um, das über ein Lichtwellenleiterstück vom optischen Sender 14 zum Koppleranschluß 4 gelangt.

Der Koppler 12 hat die Eigenschaft, daß er, optimiert auf die oben beschriebene Einkopplung des Pumplichts, ohne besondere Maßnahmen die zusätzliche Aufgabe erfüllt, das optische Signal vom Anschluß 4 verlustarm auf den Koppleranschluß 1 zu koppeln, von wo es dann über den Lichtwellenleiter 15 in Richtung zum Endpunkt A des Systems übertragen wird.

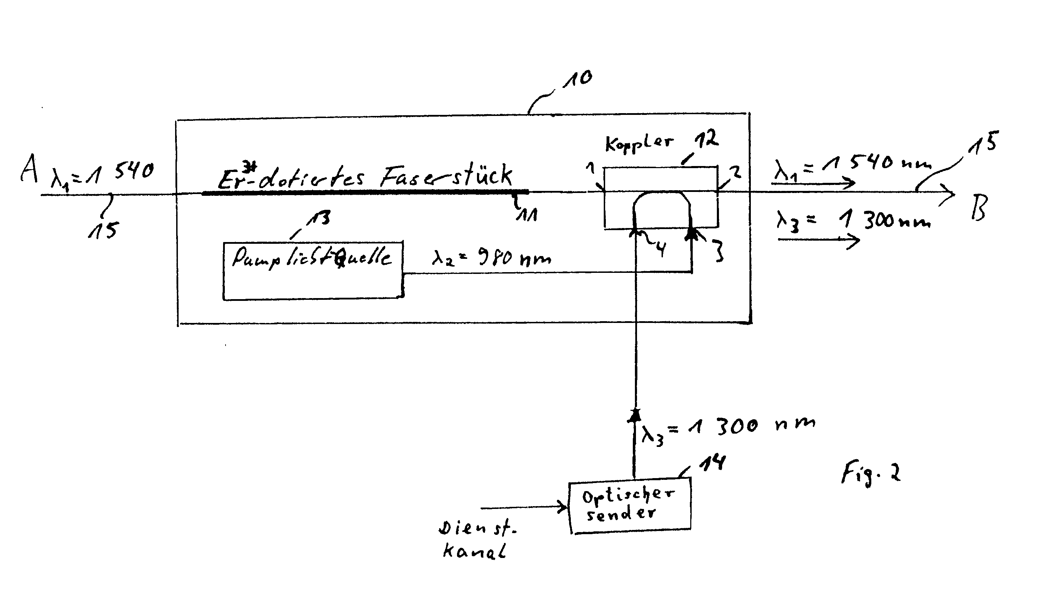

In dem in Fig. 2 gezeigten erfindungsgemäßen System sind die entsprechenden Teile mit den entsprechenden im Zusammenhang mit Fig. 1 eingeführten Bezugzeichen versehen und bedürfen daher keiner eigenen Erläuterung. Der Koppler 12 befindet sich hierbei in Übertragungsrichtung des von A nach B zu übertragenden Signals hinter dem $Er^{3+}$-dotierten Faserstück 11. Er koppelt auch hier das eigentliche Übertragungssignal von seinem Anschluß 1 auf seinen Anschluß 2 und das Pumplicht von seinem Anschluß 3 in das Faserstück 11 ein, letzteres über den Anschluß 1 anstatt wie bei Fig. 1 über den Anschluß 2. Bei dieser Konfiguration ist durch Verbindung eines optischen Senders 14 mit der Lichtwellenlänge $\lambda_3$ von 1300 nm über ein Lichtwellenleiterstück mit dem Koppleranschluß 4 ein zweites optisches Signal vom Ort des faseroptischen Verstärkers 10 in Richtung zum Endpunkt B des Übertragungssystems übertragbar. Hierbei läuft das zweite optische Signal mit der Wellenlänge $\lambda_3$ in derselben Richtung wie das erste optische Signal mit der Wellenlänge $\lambda_1$, wogegen es beim System nach Fig. 1 entgegengesetzt dazu läuft.

Statt nur eines Kopplers vor oder hinter dem $Er^{3+}$-dotierten Faserstück 11 können auch wie bei dem eingangs genannten bekannten System auch auf beiden Seiten Koppler vorhanden sein, so daß es möglich ist, ein Zusatzsignal wahlweise gemäß Fig. 1 oder Fig. 2 vom Ort des faseroptischen Verstärkers in der einen oder anderen Richtung oder auch ein erstes Zusatzsignal in die eine und ein zweites Zusatzsignal in die andere Richtung zu übertragen.

Dabei ist es auch möglich, das $Er^{3+}$-dotierte Faserstück 11 von beiden Seiten aus jeweils einer Pumplicht-Quelle mit Pumplicht zu versorgen.

Die im Ausführungsbeispiel der vorstehenden Beschreibung genannten Wellenlängen sind nur Beispiele von Wellenlängen, für die die zur Verfügung stehenden Systemkomponenten geeignet sind. Selbstverständlich können auch andere Wellenlängen verwendet werden, sofern die betroffenen Systemkomponenten dafür geeignet sind.

**Patentansprüche**

1. System zum Übertragen eines ersten optischen Signals über einen Lichtwellenleiter (15), der einen faseroptischen Verstärker (10) enthält, welcher im wesentlichen besteht aus einem verstärkenden Faserstück (11), einer Pumplicht-Quelle (13) und einem wellenlängenselektiven faseroptischen Koppler (12) zum Ankoppeln der Pumplicht-Quelle (13) an das verstärkende Faserstück (11),
   **dadurch gekennzeichnet,**
   daß zum Übertragen eines zweiten optischen Signals ein optischer Sender (14) an einen freien Anschluß (4) des faseroptischen Kopplers (12) angekoppelt ist.

2. System nach Anspruch 1, bei dem der faseroptische Koppler (12) in Übertragungsrichtung des ersten optischen Signals vor dem verstärkenden Faserstück (11) angeordnet ist, dadurch gekennzeichnet, daß der faseroptische Koppler (12) das zweite optische Signal so in den Lichtwellenleiter (15) einkoppelt, daß es in Gegenrichtung zum ersten optischen Signal übertragen wird (Fig. 1).

3. System nach Anspruch 1, bei dem der faseroptische Koppler (12) in Übertragungsrichtung des ersten optischen Signals hinter dem verstärkenden Faserstück (11) angeordnet ist, dadurch gekennzeichnet, daß der faseroptische Koppler (12) das zweite optische Signal so in den Lichtwellenleiter (15) einkoppelt, daß es in derselben Richtung wie das erste optische Signal übertragen wird (Fig. 2).

4. System nach einem der vorstehenden Ansprüche, dadurch gekennzeichnet, daß das erste optische Signal, das zweite optische Signal und das Pumplicht unterschiedliche Wellenlängen ($\lambda_1, \lambda_3, \lambda_2$) haben und daß der faseroptische Koppler (12) derart wellenlängenselektiv ist, daß er das erste optische Signal ($\lambda_1$) von einem ersten Anschluß (1) auf einen zweiten Anschluß (2), das Pumplicht ($\lambda_2$) von einem dritten Anschluß (3) zum zweiten Anschluß (2) und das dritte optische Signal ($\lambda_3$) von einem vierten Anschluß (4) auf den ersten Anschluß (1) koppelt (Fig. 1).

5. System nach einem der Ansprüche 1 bis 3, dadurch gekennzeichnet, daß das erste optische Signal, das zweite optische Signal und das Pumplicht unterschiedliche Wellenlängen ($\lambda_1, \lambda_3, \lambda_2$) haben und daß der faseroptische Koppler (12) derart wellenlängenselektiv ist, daß er das erste optische Signal ($\lambda_1$) von einem ersten Anschluß (1) auf einen zweiten Anschluß (2), das Pumplicht von einem dritten Anschluß (3) zum ersten Anschluß (1) und das dritte optische Signal ($\lambda_3$) von einem vierten Anschluß (4) auf den zweiten Anschluß (2) koppelt (Fig. 2).

Fig. 1

EP 0 450 524 A2

EP 0 450 524 A2

10

Koppler 12

A $\lambda_1 = 1\,540$

Er-dotiertes Faser-stück

15

11

1

2

$\lambda_1 = 1\,540\,nm$  15

$\lambda_3 = 1\,300\,nm$  B

13

4

3

Pumplichtquelle    $\lambda_2 = 980\,nm$

$\lambda_3 = 1\,300\,nm$

$\lambda_3 = 1\,300\,nm$

14

Optischer sender

Dienst-kanal

Fig. 2